(19) Europäisches Patentamt
European Patent Office
Office européen des brevets

(11) **EP 4 765 849 A1**

(12) **EUROPEAN PATENT APPLICATION**

(43) Date of publication:
24.06.2026 Bulletin 2026/26

(51) International Patent Classification (IPC):
*H04N 25/53* (2023.01)    *H04N 23/745* (2023.01)
*H04N 25/773* (2023.01)

(21) Application number: 25222936.4

(22) Date of filing: **12.12.2025**

(52) Cooperative Patent Classification (CPC):
**H04N 25/773; H04N 23/745; H04N 25/53**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.12.2024 JP 2024224645**

(71) Applicant: **Canon Kabushiki Kaisha**
**Tokyo, 146-8501 (JP)**

(72) Inventors:
• **NUMATA, Aihiko**
**Tokyo, 146-8501 (JP)**
• **HOSONO, Suguru**
**Tokyo, 146-8501 (JP)**

(74) Representative: **TBK**
**Bavariaring 4-6**
**80336 München (DE)**

(54) **PHOTOELECTRIC CONVERSION DEVICE, PHOTOELECTRIC CONVERSION METHOD, COMUPUTER PROGRAM, AND STORAGE MEDIUM**

(57)    A photoelectric conversion device includes a photoelectric conversion element including an avalanche photodiode that outputs signals in accordance with incident photons and a counter that counts the number of output signals from the avalanche photodiode and outputs the number of output signals. It is determined whether the number of output signals is equal to or greater than a threshold. An exposure time of the avalanche photodiode and a recharge cycle of the avalanche photodiode during the exposure time are controlled. At least one of the threshold, the exposure time, and the recharge cycle is controlled so that a maximum number of recharges determined in accordance with the exposure time and the recharge cycle is greater than the threshold.

FIG. 7A

**Description**

TECHNICAL FIELD

The present disclosure relates to a photoelectric conversion device, a photoelectric conversion method, a computer program, and a storage medium.

BACKGROUND

In recent years, photoelectric conversion elements have been proposed which digitally measure the number of photons arriving at avalanche photodiodes (APDs) and output measured values as photoelectrically converted digital signals from pixels.

Japanese Patent Application Laid-open No. 2020-123847 discloses a photoelectric conversion device that enables appropriate detection of the number of cycles in which avalanche multiplication occurs by controlling a timing of APD recharging using a pulse signal.

In the photoelectric conversion device disclosed in Japanese Patent Application Laid-open No. 2020-123847, one photon can be counted for each cycle of a pulse generated by a pulse generation circuit. In this scheme, count omission may occur when a plurality of photons are incident during one pulse cycle.

However, when general steady light is imaged, an influence of count omission can be reduced through a correction process by statistically predicting the number of photons incident in one pulse cycle of a pulse.

On the other hand, under an environment in which a light source where light blinks within one frame or, in particular, an LED light source using a driving method of a pulse modulation scheme is used for illumination, or in a case where a light source or the like moving in a frame is moved,, many count omissions occur compared to a case where steady light is used. Therefore, the accuracy of a process of correcting count omissions may deteriorate, and a color variation compared to that in an actual environment may occur.

SUMMARY

According to an aspect of the present disclosure, a photoelectric conversion device includes a photoelectric conversion element including an avalanche photodiode that outputs signals in accordance with incident photons and a counter that counts the number of output signals from the avalanche photodiode and outputs the number of output signals. It is determined whether the number of output signals is equal to or greater than a threshold. An exposure time of the avalanche photodiode and a recharge cycle of the avalanche photodiode during the exposure time are controlled. At least one of the threshold, the exposure time, and the recharge cycle is controlled so that a maximum number of recharges determined in accordance with the exposure time and the recharge cycle is greater than the threshold.

Further features of the present invention will become apparent from the following description of embodiments with reference to the attached drawings.

BRIEF DESCRIPTION OF THE DRAWINGS

FIG. 1 is a diagram illustrating a configuration example of a photoelectric conversion element according to a first embodiment of the present disclosure.
FIG. 2 is a diagram illustrating a configuration example of a sensor substrate according to the first embodiment.
FIG. 3 is a diagram illustrating a configuration example of a circuit substrate according to the first embodiment.
FIG. 4 is a diagram illustrating a pixel and an equivalent circuit example of a signal processing circuit corresponding to the pixel according to the first embodiment.
FIG. 5 is a timing chart of the photoelectric conversion element according to the first embodiment.
FIG. 6A is a diagram illustrating a count operation when steady light is used as an illumination.
FIG. 6B is a diagram illustrating a count operation when a light source that blinks temporally is used for illumination.
FIG. 6C is a diagram illustrating illumination intensity of a region of interest when there is a light source moving in one frame.
FIG. 7A is a diagram illustrating an example in which, in a photoelectric conversion element of the related art, a maximum number of recharges is increased by shortening a recharge cycle and a saturation determination count number is set to be less than the maximum number of recharges.
FIG. 7B is a diagram illustrating an example in which, in the photoelectric conversion element of the related art, the saturation determination count number is set to be less than the maximum number of recharges by lengthening an exposure time.

FIG. 7C is a diagram illustrating an example in which, in the photoelectric conversion element of the related art, the saturation determination count number is set to be less than the maximum number of recharges by decreasing the saturation determination count number.

FIG. 7D is a diagram illustrating an example in which the number of photons incident per unit time on each pixel of a photoelectric conversion element is reduced.

FIGS. 8A to 8D are diagrams illustrating an example of response characteristics of the photoelectric conversion element according to the first embodiment.

FIG. 9 is a diagram illustrating an example of a relationship among a saturation determination count number, the exposure time, and the recharge cycle in the photoelectric conversion element according to the first embodiment.

FIG. 10 is a diagram illustrating an example of a relationship among a saturation determination count number, an exposure time, and a recharge cycle in a photoelectric conversion element according to a second embodiment.

FIG. 11 is a diagram illustrating an example of a relationship among a saturation determination count number, an exposure time, and a recharge cycle in a photoelectric conversion element according to a third embodiment.

FIG. 12 is a functional block diagram illustrating a configuration example of a photoelectric conversion device in which a photoelectric conversion element according to the first to fourth embodiments is used.

DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

First Embodiment

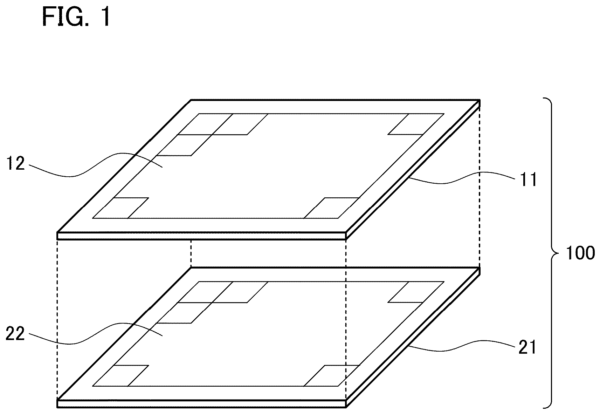

FIG. 1 is a diagram illustrating a configuration example of a photoelectric conversion element 100 according to a first embodiment of the present disclosure. A sensor substrate 11 includes a pixel region 12. The circuit substrate 21 includes a circuit region 22 that processes a signal detected in the pixel region 12.

In the present embodiment, an example of a photoelectric conversion device that has a so-called stacked structure in which the photoelectric conversion element 100 is configured such that two substrates which are the sensor substrate 11 and the circuit substrate 21 are stacked and electrically connected will be described. However, the photoelectric conversion device may have a so-called non-stacked structure in which a configuration including the sensor substrate and a configuration including the circuit substrate are arrayed in a common semiconductor layer.

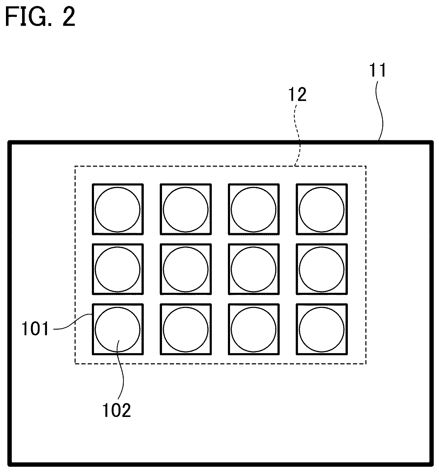

FIG. 2 is a diagram illustrating a configuration example of the sensor substrate 11 according to the first embodiment. The pixel region 12 of the sensor substrate 11 includes a plurality of pixels 101 arrayed in a 2-dimensional form across pluralities of rows and columns. The pixel 101 includes a photoelectric conversion unit 102 that includes an avalanche photodiode (hereinafter referred to as an APD). The number of rows and the number of columns of the pixel array forming the pixel region 12 are not particularly limited.

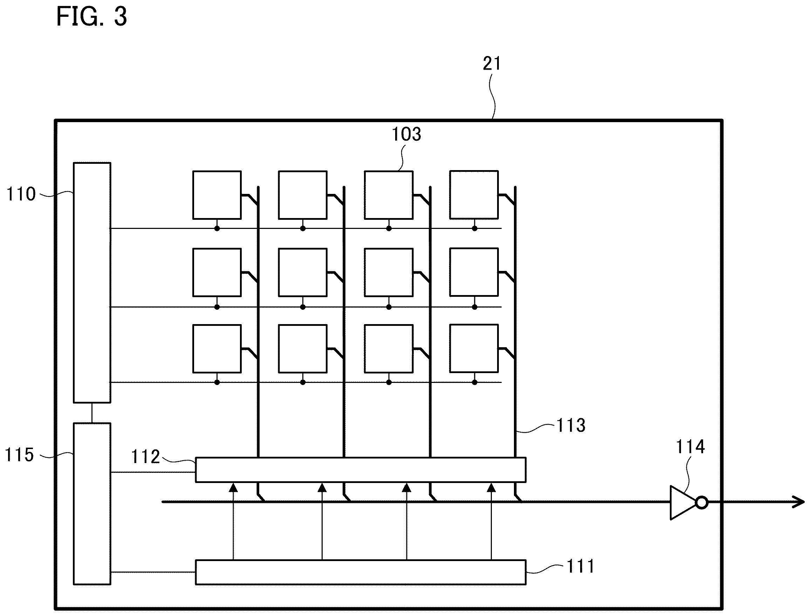

FIG. 3 is a diagram illustrating a configuration example of the circuit substrate 21 according to the first embodiment. The circuit substrate 21 includes signal processing circuits 103 that process charges photoelectrically converted by the photoelectric conversion units 102 in FIG. 2, a read circuit 112, a control pulse generation unit 115, a horizontal scanning circuit 111, a signal line 113, and a vertical scanning circuit 110.

The vertical scanning circuit 110 receives a control pulse supplied from the control pulse generation unit 115 and supplies the control pulse to each pixel. In the vertical scanning circuit 110, a logical circuit such as a shift register or an address decoder is used.

A signal output from the photoelectric conversion unit 102 of the pixel is processed by the signal processing circuit 103. The signal processing circuit 103 includes a counter or a memory and retains a digital value in the memory. The horizontal scanning circuit 111 inputs a control pulse for selecting each column in sequence to the signal processing circuit 103 in order to read a signal from the memory of each pixel in which the digital signal is retained.

For the selected column, a signal is output to the signal line 113 from the signal processing circuit 103 of the pixel selected by the vertical scanning circuit 110. The signal output to the signal line 113 is output to the outside of the photoelectric conversion element 100 via the output circuit 114.

As illustrated in FIGS. 2 and 3, the plurality of signal processing circuits 103 are arrayed in a region overlapping the pixel region 12 in a plan view. In a plan view, the vertical scanning circuit 110, the horizontal scanning circuit 111, the read circuit 112, the output circuit 114, and the control pulse generation unit 115 are arrayed to overlap between the end of the sensor substrate 11 and the end of the pixel region 12.

In other words, the sensor substrate 11 has the pixel region 12 and a non-pixel region arrayed around the pixel region 12. The vertical scanning circuit 110, the horizontal scanning circuit 111, the read circuit 112, the output circuit 114, and the control pulse generation unit 115 are arrayed in a region overlapping the non-pixel region in a plan view.

The array of the signal lines 113 and the array of the read circuit 112 and the output circuit 114 are not limited to that of FIG. 3. For example, the signal lines 113 may extend in the row direction, and the read circuit 112 may be arrayed at extension ends of the signal lines 113.

A function of the signal processing unit may not necessarily be provided in each of all the photoelectric conversion units. Instead, one signal processing unit may be shared by a plurality of photoelectric conversion units and signal processing may be performed in sequence.

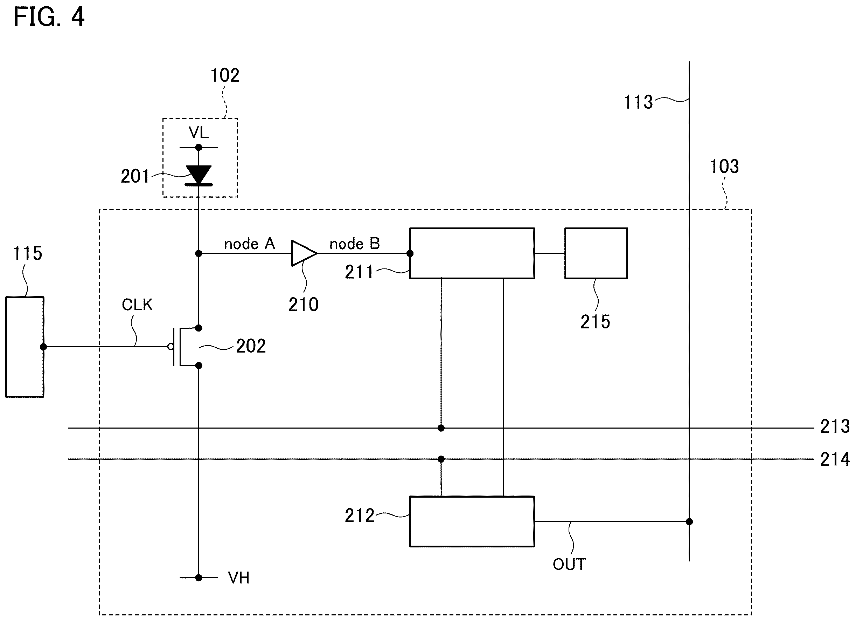

FIG. 4 is a diagram illustrating the pixel 101 and an equivalent circuit example of a signal processing circuit 103 corresponding to the pixel 101 according to the first embodiment.

The APD 201 generates pairs of electrons and holes in accordance with incident light through photoelectric conversion. Of two nodes of the APD 201, one node is connected to a power supply line to which the driving voltage VL (first voltage) is supplied.

Of the two nodes of the APD 201, the other node can be connected via a switch 202 to a power supply line to which a driving voltage VH (second voltage) higher than the voltage VL is supplied. In FIG. 4, one node of the APD 201 is an anode and the other node of the APD 201 is a cathode.

A reverse bias voltage that causes the APD 201 to perform an avalanche multiplication operation is supplied to the anode and the cathode of the APD 201. When such a voltage is supplied, charges generated by incident light cause avalanche multiplication to generate an avalanche current.

There are a Geiger mode in which an operation is performed with a voltage difference between the anode and the cathode greater than a breakdown voltage when the reverse bias voltage is supplied and a linear mode in which an operation is performed with a voltage difference between the anode and the cathode is near or equal to or less than the breakdown voltage. An APD operating in the Geiger mode is referred to as an SPAD. In the case of the SPAD, for example, the voltage VL (first voltage) is -30 V and the voltage VH (second voltage) is 1 V.

The switch 202 is connected to a power supply line supplied with the driving voltage VH and one node of the anode and the cathode of the APD 201. The switch 202 switches a resistance value between the APD 201 and the power supply line supplied with the driving voltage VH.

That is, the switch 202 is connected to one node of the anode and the cathode of the avalanche photodiode and the power supply line to which the driving voltage is applied, and switches a resistance value between the one node and the power supply line.

In the switching of the resistance value, the resistance value is preferably changed 10 times or more and the resistance value is more preferably changed 100 times or more. Hereinafter, a state in which the resistance value is lowered is referred to as an ON state of the switch 202 and a state in which the resistance value is raised is referred to as an OFF state of the switch 202.

The switch 202 functions as a quenching element. That is, the switch 202 functions as a load circuit (quenching circuit) during signal amplification through the avalanche multiplication, suppresses a voltage supplied to the APD 201, and performs a quenching operation of suppressing the avalanche multiplication.

The switch 202 performs a recharging operation of returning the voltage supplied to the APD 201 to the driving voltage VH by flowing a current corresponding to a voltage drop through the quenching operation. The switch 202 can be configured with a MOS transistor. FIG. 4 illustrates the switch 202 that is a PMOS transistor.

A control signal CLK for controlling the switch 202 is applied from the control pulse generation unit 115 to a gate electrode of a MOS transistor included in the switch 202. The control pulse generation unit 115 controls a recharge cycle of the avalanche photodiode by controlling a voltage applied to the gate electrode of the switch 202 and controlling ON and OFF of the switch 202.

The signal processing circuit 103 includes a waveform shaping unit 210, a counter circuit 211, and a selection circuit 212. The signal processing circuit 103 may include at least one of the waveform shaping unit 210, the counter circuit 211, and the selection circuit 212.

The waveform shaping unit 210 shapes a variation in voltage of the cathode of the APD 201 obtained during photon detection and outputs a pulse signal. As the waveform shaping unit 210, for example, an inverter circuit is used. As the inverter circuit, a circuit in which a plurality of inverters are connected in series may be used, or another circuit that has a waveform shaping effect may be used.

The counter circuit 211 counts a pulse signal output from the waveform shaping unit 210 and retains a count value. When a control pulse RES is supplied via a driving line 213, a signal retained in the counter circuit 211 is reset.

A saturation determination unit 215 determining that the number of output signals measured by the counter circuit is saturated is connected to the counter circuit 211. The saturation determination unit 215 pauses count-up of the pulse signal by the counter circuit and retains a saturation determination count number as a count value in the counter circuit 211 when the number of output signals measured by the counter circuit 211 reaches the saturation determination count number.

In the photoelectric conversion element according to the present embodiment, by causing a control unit 801 to be described below to control the control pulse generation unit 115, control is performed such that the saturation determination count number becomes less than a maximum number of recharges determined by a quotient obtained by dividing an exposure time of the APD by a recharge cycle. As details will be described below, by causing the saturation determination unit 215 to control the saturation determination count number as described above, it is possible to provide a photoelectric conversion device capable of inhibiting a color variation even in an environment in which a blinking light source is used for illumination light.

The saturation determination count number may be a fixed value as long as the saturation determination count number is less than the maximum number of recharges, but is preferably configured to be changeable according to the exposure time or the recharge cycle. When the photoelectric conversion element has a plurality of driving modes, the photoelectric conversion element may have a mode in which the saturation determination count number is equal to or greater than the maximum number of recharges. The saturation determination count number of each pixel can be controlled by a signal line (not illustrated).

The selection circuit 212 is supplied with a control pulse SEL via a driving line 214 in Fig. 4 (not illustrated in FIG. 3) from the vertical scanning circuit 110 in FIG. 3 to switch between electrical connection and non-connection between the counter circuit 211 and the signal line 113. The selection circuit 212 includes, for example, a buffer circuit that outputs a signal.

An output signal OUT illustrated in FIG. 4 is an output signal serving as a pixel output and a count value of the counter circuit 211 is output. That is, the counter circuit 211 functions as a counter that counts and outputs the number of output signals from the avalanche photodiode until the number of count signals reaches the saturation determination count number.

A switch such as a transistor may be disposed between the switch 202 serving as a quench element and the APD 201 or between the photoelectric conversion unit 102 and the signal processing circuit 103 to switch electric connection. Similarly, supply of the voltage VH or the voltage VL supplied to the photoelectric conversion unit 102 may be electrically switched using a switch such as a transistor.

The quench operation and the recharge operation in which the switch 202 is used in response to the avalanche multiplication in the APD 201 can be performed. However, the output signal is not determined depending on a detection timing of the photon in some cases.

For example, a time at which the avalanche multiplication occurs in the APD, an input voltage to a node nodeA becomes a low level, and a recharge operation is performed is assumed. In general, a determination threshold of the waveform shaping unit 210 is set to a voltage higher than a voltage difference at which the avalanche multiplication occurs in the APD.

When a photon is incident in a state in which a voltage of the node nodeA is lower than the determination threshold by the recharge operation and the APD is at a voltage at which the avalanche multiplication is possible, the avalanche multiplication occurs in the APD and the voltage of the node nodeA is lowered.

That is, since the voltage of the node nodeA is lowered as the voltage lower than the determination threshold, an output voltage from a node nodeB is not changed despite detection of the photon. Accordingly, the signal is not determined despite occurrence of the avalanche multiplication.

In particular, under high illuminance, photons enter consecutively within a short period, which makes it difficult to determine a signal. Accordingly, despite the high illuminance, the number of actually incident photons and the output signal easily deviate.

In the present embodiment, however, by applying the control signal CLK to the switch 202 and switching between ON and OFF of the switch 202, a signal can be determined even when photons enter the APD consecutively in a short time.

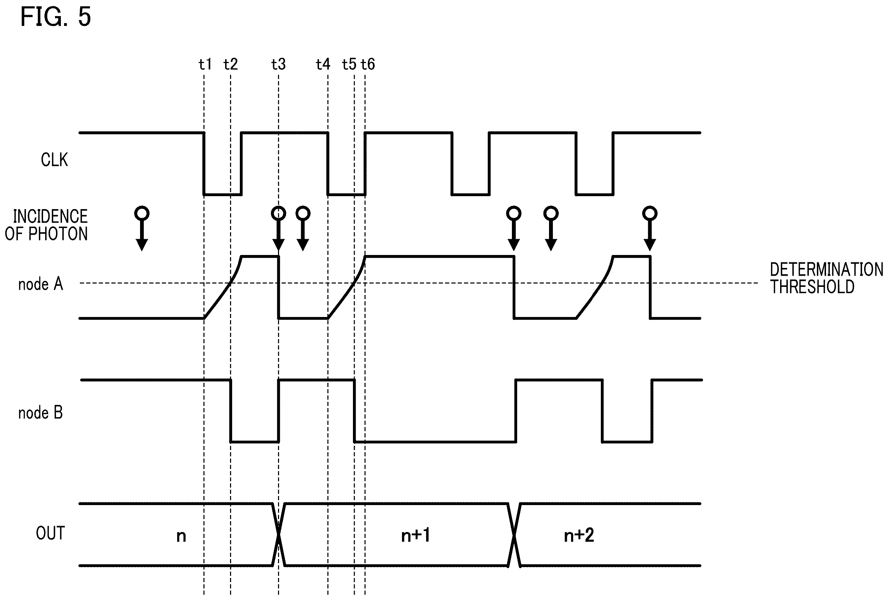

FIG. 5 is a timing chart of the photoelectric conversion element for describing the first embodiment and schematically illustrates a relationship among a control signal CLK of the switch, a voltage of the node nodeA, a voltage of the node nodeB, and an output signal. FIG. 5 illustrates a case where the control signal CLK is a pulse signal with a constant repetition cycle.

In the photoelectric conversion device according to the present embodiment, when the control signal CLK is at a high level, supply of the driving voltage VH to the APD is difficult. When the control signal CLK is at a low level, the driving voltage VH is supplied to the APD. The high level of the control signal CLK is, for example, 1 V and the low level of the control signal CLK is, for example, 0 V.

When the control signal CLK is at the high level, the switch 202 is turned off. When the control signal CLK is at the low level, the switch 202 is turned on. A resistance value of the switch 202 during the high level of the control signal CLK is higher than a resistance value of the switch 202 during the low level of the control signal CLK.

When the control signal CLK is at the high level, execution of a recharge operation is difficult despite occurrence of avalanche multiplication in the APD. Therefore, a voltage supplied to the APD becomes a voltage equal to or less than a breakdown voltage of the APD. Accordingly, the avalanche multiplication operation in the APD stops.

At time t1, the control signal CLK changes from the high level to the low level, the switch 202 is turned on, and a recharge operation of the APD starts. Accordingly, a voltage of the cathode of the APD transitions to the high level.

Then, a voltage difference between voltages applied to the anode and the cathode of the APD enables the avalanche multiplication. The voltage of the cathode is the same as that of the node nodeA. Accordingly, when the voltage of the cathode transitions from the low level to the high level, a voltage of the node nodeA becomes equal to or greater than the determination threshold at time t2.

At this time, a pulse signal output from the node nodeB is inverted from the high level to the low level. When the recharge is completed, a voltage difference between the driving voltages VH and VL is applied to the APD 201. Thereafter, the control signal CLK becomes the high level and the switch 202 is turned off.

Subsequently, at time t3, when photons are incident on the APD 201, the avalanche multiplication occurs in the APD 201, an avalanche multiplication current flows to the switch 202, and a voltage of the cathode drops. That is, the voltage of the node nodeA drops.

When the voltage of the node nodeA falls below the determination threshold during dropping of the voltage of the node nodeA, the voltage of the node nodeB changes from the low level to the high level. That is, a portion of an output waveform in the node nodeA exceeding the determination threshold is waveform-shaped by the waveform shaping unit 210 and is output as a signal in the node nodeB. Then, the counter circuit performs counting, and a count value of a counter signal output from the counter circuit increases by one LSB.

The photons are incident on the APD between time t3 and time t4, but the switch 202 is in the OFF state and an application voltage to the APD 201 is not a voltage difference that enables the avalanche multiplication. Therefore, a voltage level of the node nodeA does not exceed the determination threshold.

At time t4, the control signal CLK changes from the high level to the low level and the switch 202 is turned on. Accordingly, a current flows to the node nodeA to compensate for the voltage drop from the driving voltage VL, and a voltage of the node nodeA transitions to an original voltage level. At this time, since the voltage of the node nodeA becomes the determination threshold or more at time t5, a pulse signal of the node nodeB is inverted from the high level to the low level.

At time t6, the node nodeA is statistically determined to the original voltage level and the control signal CLK changes from the low level to the high level. Thereafter, as described from time t1 to time t6, a voltage of each node, a signal line, or the like changes in response to the control signal CLK or incidence of the photon. In this way, by applying the control signal CLK to the switch 202 and switching between ON and OFF of the switch 202, it is possible to control a recharge frequency of the APD.

When the control signal CLK is not used, there is a problem that an actual count value becomes less than a count value corresponding to luminance of incident light during high luminance. However, by applying the control signal CLK to the switch 202 and switching between ON and OFF of the switch 202, it is possible to solve the problem.

Here, when the recharge frequency of the APD is controlled with the control signal CLK and a plurality of photons are incident during one pulse cycle, count omission may occur. Therefore, a relationship between the number of input signals and the number of output signals is not linear.

When general steady light is captured, the relationship between the number of input signals and the number of output signals can be theoretically derived from a statistical distribution of the number of incident photons. Specifically, when the number of input signals is Nph, the number of output signals is Nct, a recharge cycle of the control signal CLK is T, and a length of an exposure time is t, the following Formula 1 holds.

$$\mathrm{Nct} = \frac{t}{T}\left(1 - e^{-\frac{t}{T}Nph}\right)$$

(Formula 1)

Accordingly, in the present embodiment, the number of photons incident during one pulse cycle is statistically predicted from the number of output signals Nct using the following Formula 2. Accordingly, an influence of count omission can be recovered through a correction process in a signal processing unit 804 to be described below. That is, nonlinear correction of the number of output signals Nct of the counter circuit can be realized by performing a process of Formula 2 in the signal processing unit 804.

$$\mathrm{Nph} = -\frac{t}{T} \times \ln\left(\frac{1 - Nct}{\frac{t}{T}}\right)$$

(Formula 2)

On the other hand, under an environment in which a light source where light blinks within one frame or, in particular, an LED light source using a driving method of a pulse modulation scheme is used for illumination, many count omissions occur compared to a case where steady light is used. Therefore, accuracy of a process of correcting count omissions may deteriorate and a color variation may occur in an actual environment.

Accordingly, in the present embodiment, in the saturation determination unit 215, a saturation determination count number when it is determined that the number of output signals measured by a counting unit becomes saturated is set to be less than a maximum number of recharges determined by a quotient obtained by dividing an exposure time by a recharge cycle. Accordingly, even under an environment in which a blinking light source is used for illumination light, a photoelectric conversion element capable of inhibiting a color variation can be provided. This will be described below.

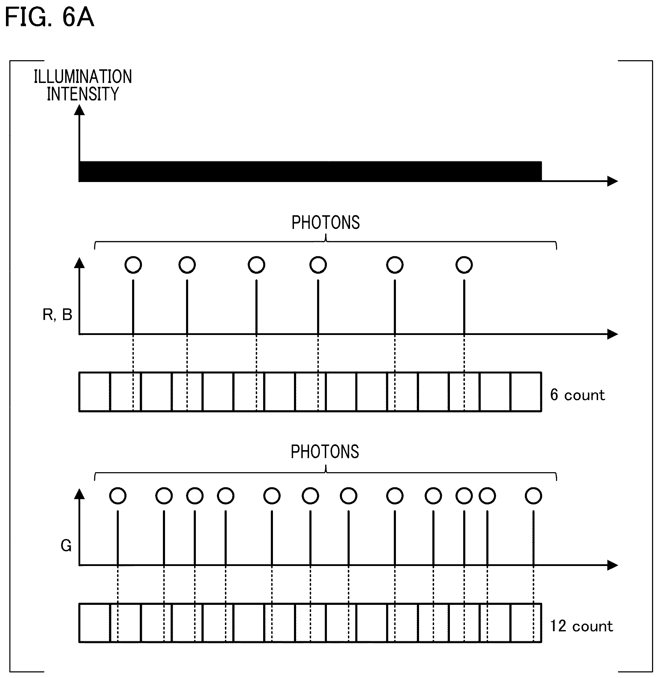

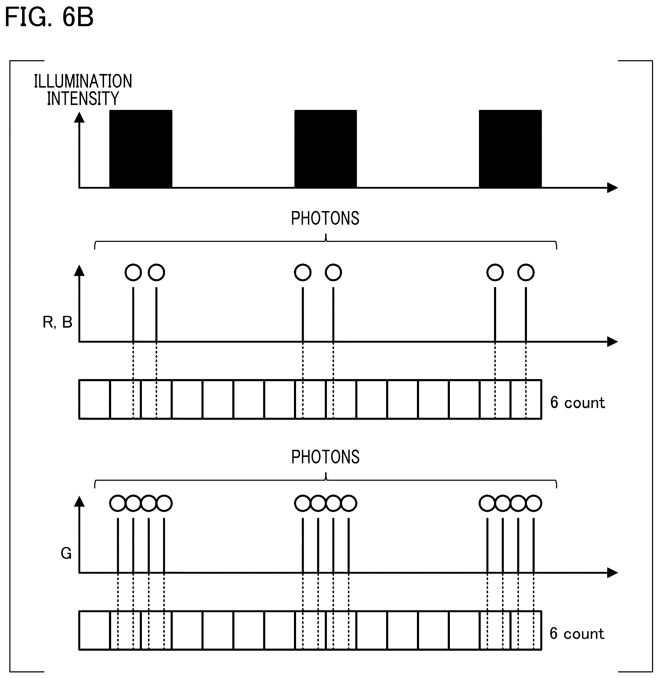

FIG. 6A is a diagram illustrating a count operation when steady light is used as an illumination. FIG. 6B is a diagram illustrating a count operation when a light source that blinks temporally is used for illumination and is a diagram illustrating a reason why a color variation occurs when a photoelectric conversion element of the related art is used under an environment in which a blinking light source is used for illumination light.

In FIGS. 6A and 6B, a photoelectric conversion element that includes an on-chip color filter of a so-called RGB Bayer array is used as the photoelectric conversion element. That is, each pixel receives light via one of R, G, and B color filters. A case where white light in which the number of photons incident on R: G: B pixels per unit time is 1: 2: 1 is used for an illumination will be described as an example.

When steady light having constant illumination intensity as in FIG. 6A is incident, the number of photons incident at each recharge cycle is small for each pixel of R, G, and B. Therefore, count omission at each recharge cycle is small.

On the other hand, as in FIG. 6B, when a blinking light source having discrete illumination intensity is used for illumination light, photons are incident and concentrate at a specific recharge cycle, which results in many count omissions. That is, when light in which the numbers of photons incident on R: G: B pixels per unit time differ is used for an illumination, many count omissions occur in a pixel of specific color (G in FIG. 6B).

Accordingly, balance of the count numbers of R pixel: G pixel: B pixels may collapse and a color variation may occur. For example, in the example of FIG. 6B, a color variation toward magenta occurs as a result of occurrence of many count omissions in the G pixels.

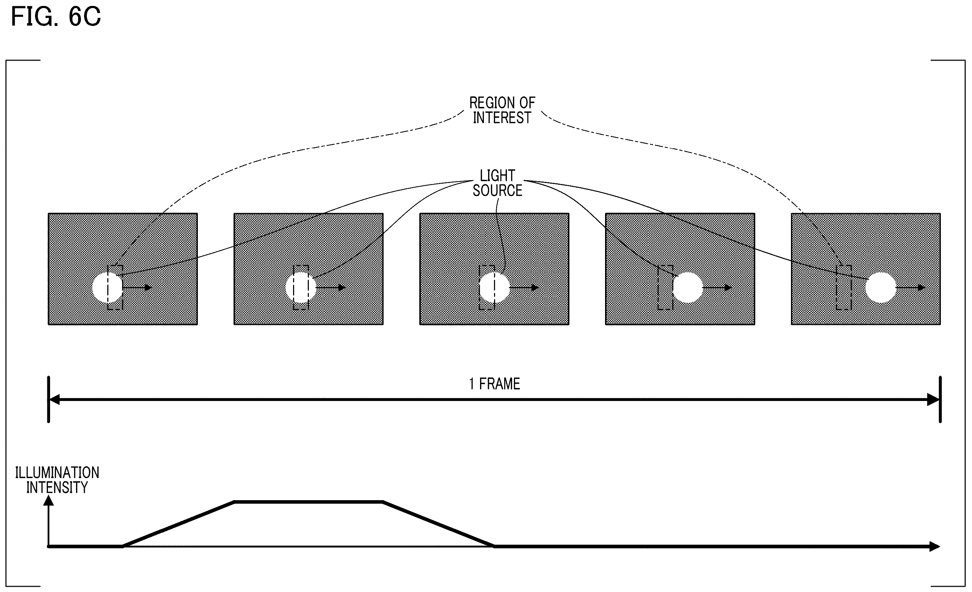

The case where the blinking light source is used for illumination light is illustrated in FIG. 6B. Even when a moving light source is used for illumination light, count omission occurs similarly. FIG. 6C is a diagram illustrating illumination intensity of a region of interest when there is a light source moving in one frame.

From FIG. 6C, it can be understood that, in a region of interest, there are moments of strong illumination intensity and moments of weak illumination intensity within one frame. Accordingly, as in the case where a blinking light source is used for illumination light, photons are incident and concentrate at a specific recharge cycle, which results in many count omissions.

In the photoelectric conversion element according to the present embodiment, however, a saturation determination count number Nsat in the saturation determination unit 215 is set to be less than the maximum number of recharges determined by a quotient obtained by dividing the exposure time t by the recharge cycle T. That is, the saturation determination count number Nsat, the exposure time t, and the recharge cycle T are set so that the following Formula 3 holds.

$$\mathrm{Nsat} < \frac{t}{T}$$

(Formula 3)

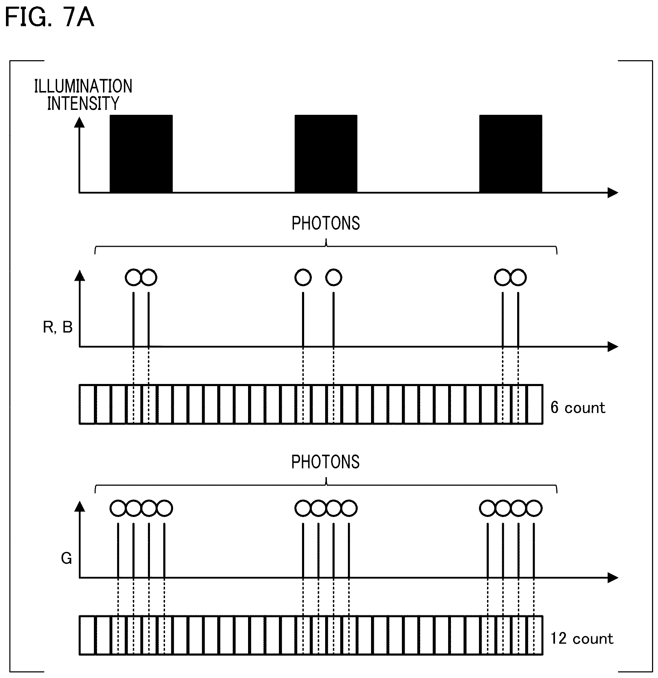

In the present embodiment, a color variation can be inhibited compared to a photoelectric conversion element of the related art by setting the saturation determination count number Nsat so that Formula 3 is satisfied. Hereinafter, two specific examples of the present embodiment will be described with reference to FIGS. 7A to 7C.

FIG. 7A is a diagram illustrating an example in which, in a photoelectric conversion element of the related art, a maximum number of recharges t/T is increased by shortening a recharge cycle T and a saturation determination count number is set to be less than the maximum number of recharges t/T.

As illustrated in FIG. 7A, the number of photons incident at each recharge cycle can be reduced by shortening the recharge cycle. Therefore, it is possible to inhibit count omission. As a result, it is possible to inhibit a color variation.

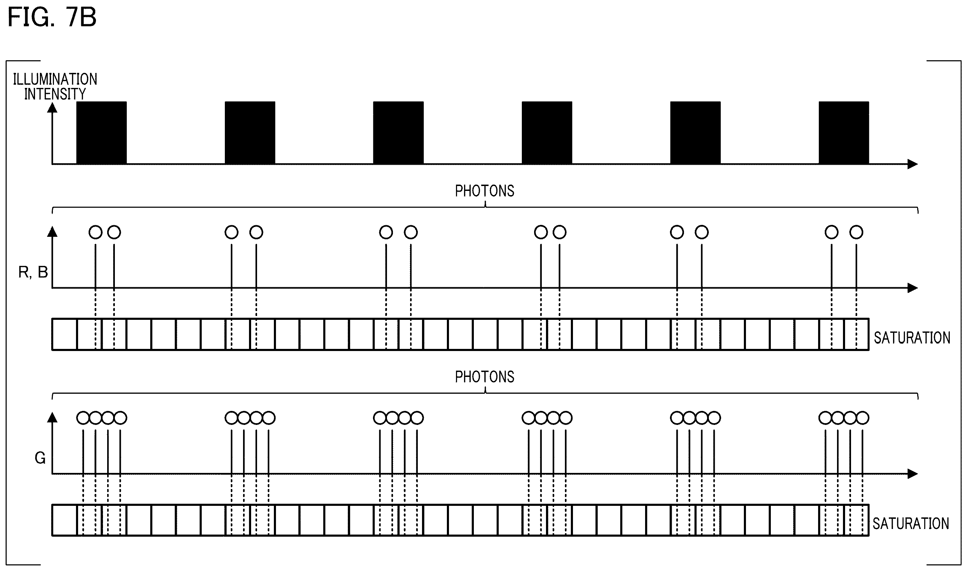

FIG. 7B is a diagram illustrating an example in which, in the photoelectric conversion element of the related art, the saturation determination count number is set to be less than the maximum number of recharges t/T by lengthening an exposure time t. Since the recharge cycle in FIG. 7B is the same as that in FIG. 6B, count omission in each recharge cycle occurs as in FIG. 6B.

However, since the exposure time is long, the count number is easily saturated in both the G pixel in which the number of count omissions is relatively large and the R or B pixel in which the number of count omissions is relatively small. Accordingly, it is possible to inhibit a color variation.

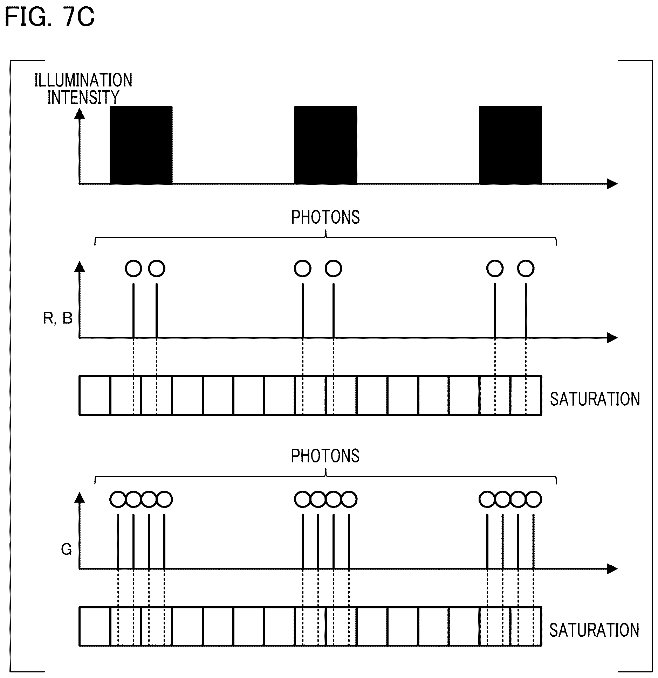

FIG. 7C is a diagram illustrating an example in which, in the photoelectric conversion element of the related art, the saturation determination count number is set to be less than the maximum number of recharges t/T by decreasing the saturation determination count number. Since the recharge cycle in FIG. 7C is the same as that in FIG. 6B, count omission in each recharge cycle occurs as in FIG. 6B.

However, since the saturation determination count number is made small, the count number is easily saturated in both the G pixel in which the number of count omissions is relatively large and the R or B pixel in which the number of count omissions is relatively small. Accordingly, it is possible to inhibit a color variation.

For example, when the saturation determination count number is set to six counts in FIG. 7C, the color is not changed toward a magenta direction as in FIG. 6B and all the R, G, and B pixels are saturated to six counts and are expressed as white. Here, when the saturation determination count number is made small, the color variation is inhibited. However, as understood from FIG. 7C, white over-exposure of an image easily occurs.

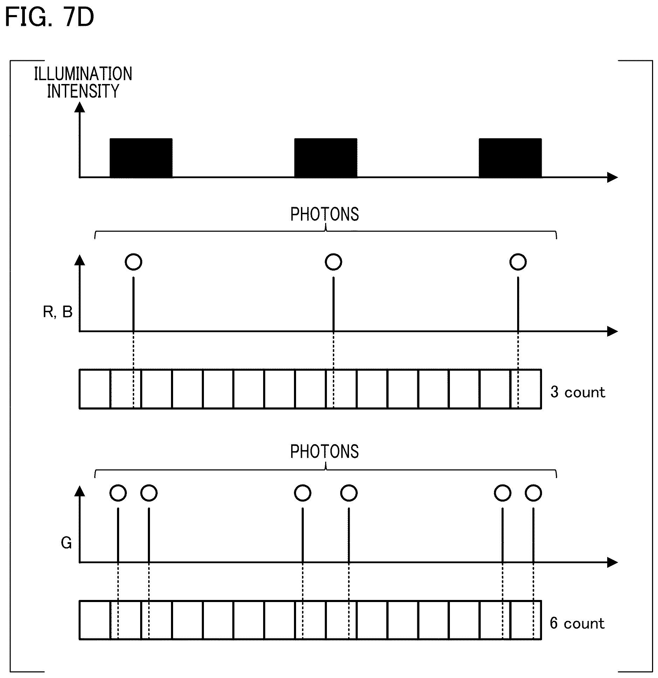

Accordingly, to further inhibit a color variation as in FIG. 7D, it is preferable to reduce the number of photons incident per unit time on each pixel of the photoelectric conversion element by an aperture, an ND filter, or the like.

FIG. 7D is a diagram illustrating an example in which the number of photons incident per unit time on each pixel of a photoelectric conversion element is reduced. It is preferable to amplify the signal level by a digital gain or the like as the number of photons per unit time decreases.

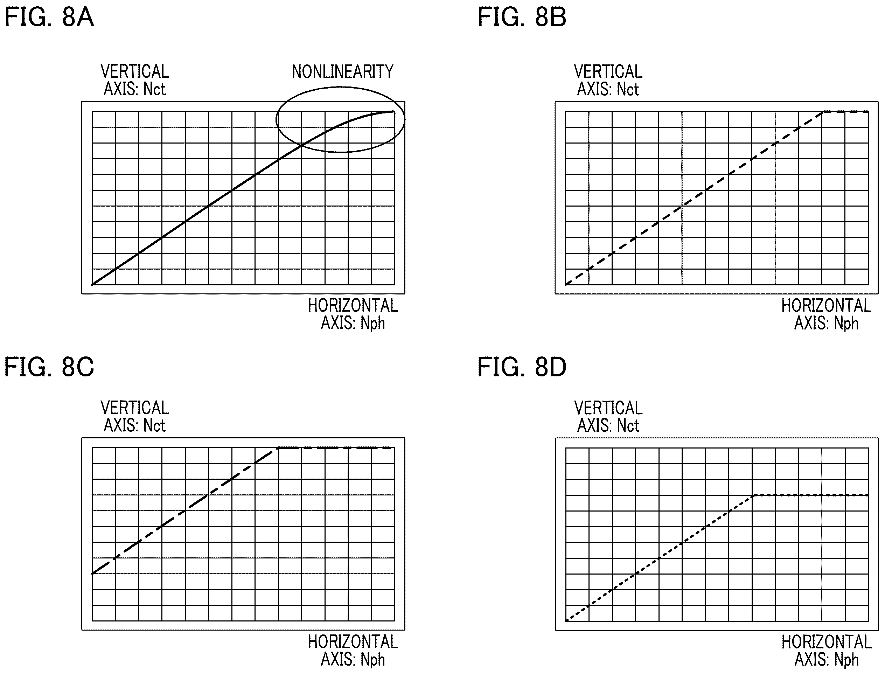

FIGS. 8A to 8D are diagrams illustrating an example of response characteristics of the photoelectric conversion element according to the first embodiment and are double-logarithmic graphs in which the horizontal axis represents Nph and the vertical axis represents Nct. In FIG. 8A, a solid line is a graphical representation of Formula 1 that expresses response characteristics of a photoelectric conversion element using the control signal CLK and indicates response characteristics of a photoelectric conversion element of the related art.

A broken line in FIG. 8B indicates an example in which the recharge cycle is shortened as in FIG. 7A. A chain line in FIG. 8C indicates an example in which an exposure time is lengthened as in FIG. 7B, and a dotted line in FIG. 8D indicates response characteristics in the example in which the saturation determination count number is made small as in FIG. 7C. It can be understood that nonlinearity of the response characteristics in FIG. 8A is alleviated with respect to all the response characteristics indicated by the broken line in FIG. 8B, the chain line in FIG. 8C, and the dotted line in FIG. 8D.

Since the nonlinearity of the response characteristics occurs due to an influence of a count loss, it can also be understood from FIGS. 8B, 8C, and 8D that a color variation is inhibited by setting the saturation determination count number Nsat to be less than the maximum number of recharges t/T.

From Formula 1 and FIGS. 8A to 8D, it can be understood that the nonlinearity of the response characteristics is alleviated as a ratio of the saturation determination count number Nsat to the maximum number of recharges t/T is smaller. Therefore, it is preferable that a ratio of the saturation determination count number to the maximum number of recharges determined by a quotient obtained by dividing the exposure time by the recharge cycle is smaller because the color variation can be inhibited.

Specifically, it is preferable that the saturation determination count number is equal to or less than 1/2 of the maximum number of recharges determined by a quotient obtained by dividing the exposure time by the recharge cycle.

In FIG. 7A, the recharge cycle is changed by changing the frequency of the control signal CLK. That is, the maximum number of recharges is controlled by changing a frequency of a signal by which the recharge cycle is controlled.

However, the recharge cycle may be changed by masking a part of the control signal CLK. That is, the maximum number of recharges may be controlled by masking a part of a signal by which the recharge cycle is controlled. In this case, a cycle of the unmasked control signal CLK corresponds to the recharge cycle T.

Further, the maximum number of recharges may be controlled by keeping the control signal CLK constantly ON, that is, by fixing a logic and changing the recharge cycle T. In this case, the recharge cycle T is not determined by the cycle (=zero) of the control signal CLK, but is a cycle determined by analog characteristics of a peripheral circuit of the APD.

Next, the photoelectric conversion element according to each embodiment will be described particularly focusing on control of the saturation determination count number, and the recharge cycle and the exposure time by which the maximum number of recharges is determined as characteristics of the present embodiment.

In the photoelectric conversion element described in the first embodiment, the maximum number of recharges (and the saturation determination count number) is fixed irrespective of the exposure time by changing the recharge cycle in accordance with the exposure time. Specifically, the recharge cycle is changed in proportion to the exposure time.

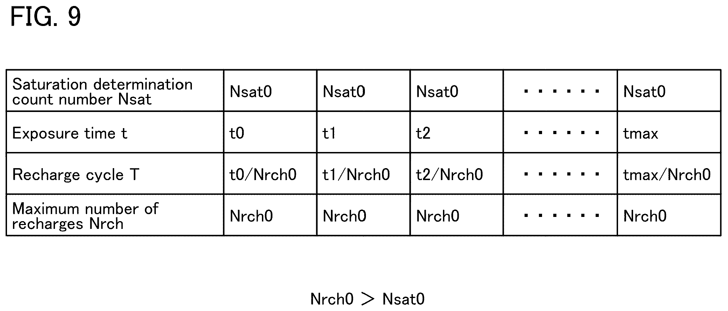

FIG. 9 is a diagram illustrating an example of a relationship among the saturation determination count number Nsat, the exposure time t, and the recharge cycle T in the photoelectric conversion element according to the first embodiment. By fixing the saturation determination count number Nsat and the maximum number of recharges t/T (=Nrch) irrespective of the exposure time, it is possible to inhibit the color variation similarly at any exposure time. Here, it is assumed that Nrch>Nsat.

As understood from Formula 2, it is preferable to fix the saturation determination count number Nsat and the maximum number of recharges t/T (=Nrch) irrespective of the exposure time since a correction process of correcting an influence of count omission can be standardized.

As in the present embodiment, it is preferable to match the saturation determination count number Nsat with the maximum count number that can be counted by the counter circuit 211 of the photoelectric conversion element 100 because a circuit size of the counter circuit 211 can be reduced. That is, it is preferable that the saturation determination count number is equal to the maximum count number that can be counted by an avalanche photodiode.

In the present embodiment, the example in which one of the saturation determination count number, the exposure time, and the recharge cycle is controlled so that the saturation count number is greater than the maximum count number has been described. However, a relationship of the saturation count number > the maximum count number may be achieved by combining the saturation determination count number, the exposure time, and the recharge cycle.

That is, the control unit 801 may control the saturation determination count number, the exposure time, and the recharge cycle in combination so that the saturation count number is greater than the maximum count number. Accordingly, the control unit 801 may control at least one of the saturation determination count number, the exposure time, and the recharge cycle so that the saturation count number is greater than the maximum count number.

As described in the present embodiment, as countermeasures against a point light source and a moving light source, at least one of the saturation determination count number (threshold), the exposure time, and the recharge cycle is controlled so that the saturation determination count number is greater than the maximum count number.

As described above, since countermeasures against a point light source and a moving light source can be taken, it is preferable to perform the above control when a detection unit (not illustrated) detects a scene in which there is a point light source or a moving light source. When the above control is performed in a case where there is no point light source or moving light source, the maximum count number may be raised unnecessarily. Therefore, there is a probability of power consumption being increased uselessly.

Accordingly, the detection unit (not illustrated) may be allowed to detect whether there is a light source having a different brightness between frames or whether a light source having brightness equal to or greater than a predetermined threshold is moving, and the above control may be performed when the above scene is detected.

Conversely, when the above-described detection unit does not detect the scene in which there is a point light source or a moving light source, the saturation determination count number is set to be equal to or less than the maximum count number. In this way, it is possible to further reduce power consumption and take countermeasures against a point light source or a moving light source.

In addition, as described above, a first mode in which control is performed so that the saturation determination count number is greater than the maximum count number and a normal mode (second mode) in which the above control is not performed may be prepared, and a mode may be switched in response to an instruction from a user. That is, a countermeasure mode of a point light source or moving light source and the normal mode may be prepared in advance so that the user arbitrarily switches the mode.

Second Embodiment

In a photoelectric conversion element according to a second embodiment, a recharge cycle is fixed and a saturation determination count number is changed in accordance with an exposure time. That is, the recharge cycle is fixed irrespective of the exposure time.

As can be understood from Formulae 1 and 2, as the maximum number of recharges t/T (=Nrch) is larger, nonlinear response characteristics due to count omission are alleviated and it is possible to inhibit a color variation. Therefore, in order to inhibit the color variation, it is preferable to increase the maximum number of recharges t/T (=Nrch). That is, it is preferable to make the recharge cycle T smaller.

However, as described above, a minimum value of the recharge cycle T is not a cycle of the control signal CLK and is limited by analog characteristics of a peripheral circuit of an APD. Accordingly, in order to inhibit the color variation most efficiently, it is preferable to realize an embodiment in which the recharge cycle is fixed to a minimum value T0 determined by the analog characteristics of the peripheral circuit of the APD irrespective of an exposure time.

In the present embodiment, since the maximum number of recharges increases in proportion to the exposure time t, a saturation determination count number may be changed in proportion to the exposure time. That is, a ratio of the saturation determination count number to the maximum number of recharges may be kept equal irrespective of the exposure time.

That is, the control signal CLK may be kept ON normally or the cycle of the control signal CLK may be set to the minimum value limited by the analog characteristics of the peripheral circuit of the APD. Here, rather than keeping the control signal CLK ON normally, it is preferable to set the cycle of the control signal CLK to the minimum value T0 limited by the analog characteristics of the peripheral circuit of the APD because the number of periods in which avalanche multiplication occurs during high luminance can be appropriately detected.

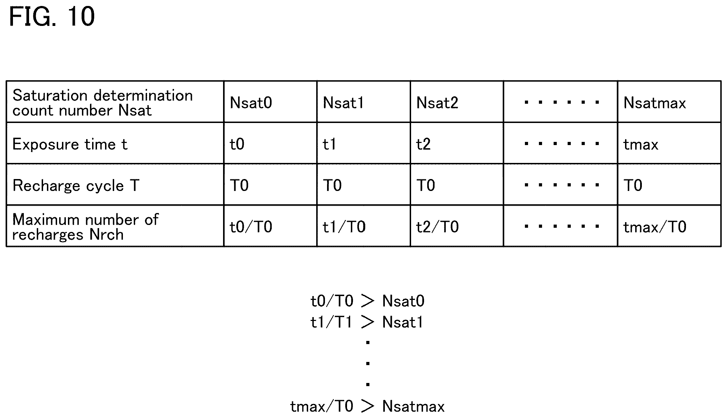

FIG. 10 is a diagram illustrating an example of a relationship among the saturation determination count number Nsat, the exposure time t, and the recharge cycle T in a photoelectric conversion element according to the second embodiment. As understood from FIG. 10, in the photoelectric conversion element according to the second embodiment, the longer the exposure time is, the larger the saturation determination count number is.

That is, the longer the exposure time is, the larger a dynamic range can be made. The longer the exposure time is, the higher an SN ratio of an image can be made because of an influence of photon shot noise.

Therefore, in the photoelectric conversion device using the photoelectric conversion element according to the second embodiment, it is preferable to perform exposure control such that an exposure time of the photoelectric conversion element can be made as long as possible by reducing light by an aperture, an ND filter, or the like.

As understood from Formula 2, in the photoelectric conversion element according to the second embodiment, the saturation determination count number Nsat and the maximum number of recharges t/T are changed with an exposure time. Therefore, it is preferable to change a correction process of correcting an influence of count omission in accordance with the exposure time.

Third Embodiment

In the photoelectric conversion element according to the second embodiment, a dynamic range or an SN ratio of an image is high when an exposure time is long. However, the dynamic range or the SN ratio of the image may be low when the exposure time is short. Therefore, in a third embodiment, a color variation is allowed in preference to a dynamic range or an SN ratio of an image when an exposure time is long.

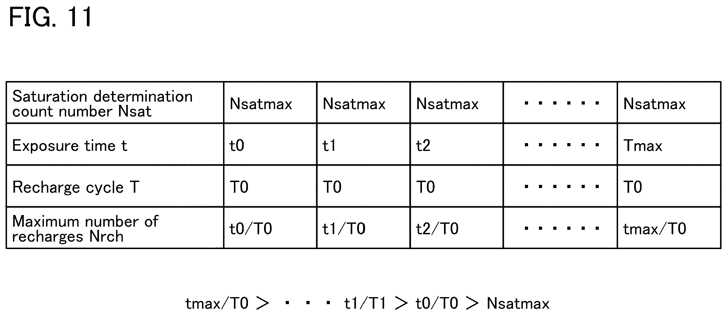

FIG. 11 is a diagram illustrating an example of a relationship among the saturation determination count number Nsat, the exposure time t, and the recharge cycle T in a photoelectric conversion element according to the third embodiment. As understood from FIG. 11, in a photoelectric conversion element according to the third embodiment, the saturation determination count number Nsat is fixed irrespective of the exposure time t. Therefore, it is possible to inhibit a decrease in the dynamic range or the SN ratio during a short exposure, which occurs in the photoelectric conversion element according to the second embodiment.

On the other hand, since the recharge cycle T is fixed irrespective of the exposure time t, the longer the exposure time t is, the larger the maximum number of recharges t/T (Nrch) is. The shorter the exposure time t is, the smaller the maximum number of recharges t/T(Nrch) is.

Accordingly, as the exposure time t is longer, a ratio of the saturation determination count number Nsat to the maximum number of recharges t/T decreases, and thus it is possible to inhibit the color variation. In this way, in the third embodiment, control is performed such that the longer the exposure time is, the smaller the ratio of the saturation determination count number to the maximum number of recharges is.

In the photoelectric conversion device using the photoelectric conversion element according to the third embodiment, it is preferable to perform exposure control such that the exposure time of the photoelectric conversion element is made as long as possible by reducing light by an aperture, an ND filter, or the like.

FIG. 11 illustrates a case in which Formula 3 is satisfied at all exposure times including a shortest exposure time t0. However, a configuration in which Formula 3 is not satisfied when the exposure time is short may be realized. That is, when the exposure time is less than a predetermined threshold, the saturation determination count number Nsat may be equal to or greater than the maximum number of recharges t/T.

As understood from Formula 2, in the photoelectric conversion element according to the third embodiment, the maximum number of recharges t/T is changed in accordance with the exposure time. Therefore, it is preferable to change a correction process of correcting an influence of count omission in accordance with the exposure time.

Fourth Embodiment

A photoelectric conversion element according to a fourth embodiment has two driving modes, that is, a first driving mode for inhibiting a color variation and a second driving mode for inhibiting a decrease in a dynamic range or an SN ratio.

As the first driving mode for inhibiting the color variation, it is preferable to use the driving mode of the first embodiment. By fixing a saturation determination count number Nsat1 and a maximum number of recharges Nrch1 irrespective of an exposure time, it is possible to inhibit the color variation similarly at any exposure time. That is, in the first driving mode, the saturation determination count number is set to be less than the maximum number of recharges irrespective of an exposure time.

On the other hand, in the second driving mode for inhibiting the decrease in the dynamic range or the SN ratio, it is preferable to set a saturation determination count number Nsat2 to be equal to or greater than a maximum number of recharges Nrch2 irrespective of an exposure time.

It is more preferable to set Nsat2=Nrch2. That is, when Nsat2=Nrch2 is set irrespective of an exposure time, the decrease in the SN ratio can be inhibited most at any exposure time. Therefore, it is preferable to set Nsat2=Nrch2.

At this time, it is preferable to match Nsat1 and Nsat2 to the maximum count number that can be counted by the counter circuit 211 of the photoelectric conversion element 100 because a circuit size can be reduced. That is, it is preferable to set the saturation determination count number Nsat1 in the first driving mode to be equal to the saturation determination count number Nsat2 in the second driving mode.

It is preferable to set the maximum number of recharges Nrch1 of the first driving mode to be greater than the maximum number of recharges Nrch2 of the second driving mode.

In the first driving mode for inhibiting the color variation and the second driving mode for inhibiting the decrease in the dynamic range or the SN ratio, the dynamic range or the SN ratio of an image are different. Therefore, a parameter of signal processing may be changed.

For example, in the second driving mode, the dynamic range is broad. Therefore, a form of a gamma curve may be flattened. On the other hand, since the SN ratio is lower in the first driving mode, a noise reduction process may be applied strongly.

Fifth Embodiment

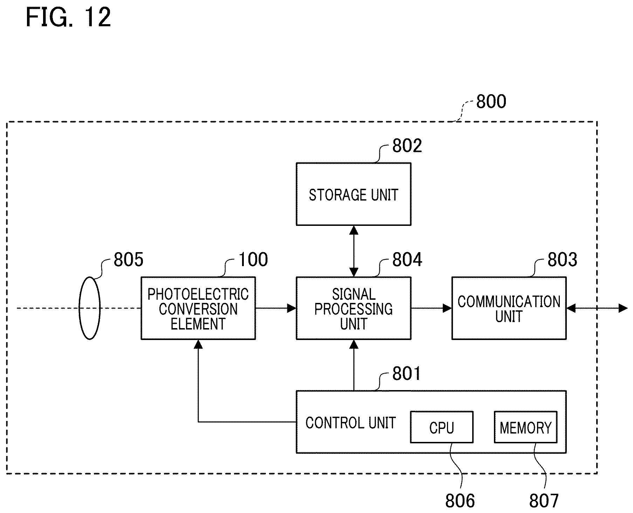

FIG. 12 is a functional block diagram illustrating a configuration example of a photoelectric conversion device in which a photoelectric conversion element according to the first to fourth embodiments is used. Some of the functional blocks illustrated in FIG. 12 are realized by causing a CPU or the like serving as a computer included in the photoelectric conversion device to execute a computer program stored in a memory serving as a storage medium.

However, some or all of the functional blocks may be realized by hardware. As the hardware, a dedicated circuit (ASIC) or a processor (a reconfigurable processor or a DSP) can be used.

The functional blocks illustrated in FIG. 12 may each not be embedded in the same casing or may be configured by different devices connected to each other via signal lines. A photoelectric conversion device 800 includes the photoelectric conversion element 100, a control unit 801, a storage unit 802, a communication unit 803, a signal processing unit 804, and an imaging optical system 805.

The photoelectric conversion element 100 captures an optical image formed by an imaging optical system 301. A signal read from the photoelectric conversion element 100 is supplied to the signal processing unit 804. The signal processing unit 804 performs processes such as black level correction, gamma curve adjustment, noise reduction, data compression, white balance correction, and a color conversion.

The signal processing unit 804 performs nonlinear correction on the number of output signals Nct of the counter circuit 211 using Formula 2 described above. Accordingly, a final image is generated. In such a configuration, it is possible to realize a photoelectric conversion element capable of inhibiting a color variation even under an environment in which a blinking light source is used for illumination light.

The control unit 801 includes the CPU 806 serving as a computer and functions as a control unit that controls an operation of each unit in the entire photoelectric conversion device 800 based on a computer program stored in the memory 807 serving as a storage medium.

The control unit 801 controls a length of an exposure cycle of each frame of the photoelectric conversion element 100 through the control pulse generation unit 115 of the photoelectric conversion element 100 and a timing of the control signal CLK.

The control unit 801 controls an exposure time of an avalanche photodiode and controls a recharge cycle of the avalanche photodiode. Further, as described above, the control unit 801 performs control such that the saturation determination count number is less than a maximum number of recharges determined by a quotient obtained by dividing the exposure time by the recharge cycle

The storage unit 802 includes, for example, a recording medium such as a memory card or a hard disk. The communication unit 803 includes a wireless or wired interface, and outputs a generated image to the outside of the photoelectric conversion device 800 and also receives a signal from the outside.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the present invention.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-224645, filed on December 20, 2024, which is hereby incorporated by reference herein in its entirety.

**Claims**

1. A photoelectric conversion device comprising:

   a photoelectric conversion element including an avalanche photodiode that outputs signals in accordance with incident photons and a counter that counts the number of output signals from the avalanche photodiode and outputs the number of output signals;
   determining unit for determining whether the number of output signals is equal to or greater than a threshold; and
   control unit for controlling an exposure time of the avalanche photodiode and a recharge cycle of the avalanche photodiode during the exposure time;
   wherein the control unit controls at least one of the threshold, the exposure time, and the recharge cycle so that a maximum number of recharges determined in accordance with the exposure time and the recharge cycle is greater than the threshold.

2. The photoelectric conversion device according to claim 1, wherein the control unit controls at least one of the threshold, the exposure time, and the recharge cycle so that a maximum number of recharges determined by a quotient obtained by dividing the exposure time by the recharge cycle is greater than the threshold.

3. The photoelectric conversion device according to claim 1 or 2, wherein the control unit controls such that the maximum number of recharges is greater than the threshold when a detection unit detects a light source that blinks from an image generated based on an output signal of the avalanche photodiode.

4. The photoelectric conversion device according to any one of claims 1 to 3, further comprising:
   a switch connected to a node of one of an anode and a cathode of the avalanche photodiode and a power supply line to which a driving voltage is applied and configured to control the recharge cycle by switching a resistance value between the one node and the power supply line.

5. The photoelectric conversion device according to any one of claims 1 to 4, wherein the threshold is equal to or less than 1/2 of the maximum number of recharges.

6. The photoelectric conversion device according to any one of claims 1 to 5, wherein the control unit controls the maximum number of recharges by changing a frequency of a signal for controlling the recharge cycle.

7. The photoelectric conversion device according to any one of claims 1 to 6, wherein the control unit fixes the maximum number of recharges irrespective of the exposure time by changing the recharge cycle in accordance with the exposure time.

8. The photoelectric conversion device according to any one of claims 1 to 7, wherein the control unit fixes the threshold irrespective of the exposure time.

9. The photoelectric conversion device according to any one of claims 1 to 8, wherein the control unit fixes the recharge cycle irrespective of the exposure time.

10. The photoelectric conversion device according to claim 9, wherein the control unit sets a ratio of the threshold to the maximum number of recharges to decrease as the exposure time becomes longer.

11. The photoelectric conversion device according to any one of claims 1 to 10, wherein the control unit has a first driving mode in which the threshold is less than the maximum number of recharges and a second driving mode in which the threshold is equal to or greater than the maximum number of recharges irrespective of the exposure time.

12. The photoelectric conversion device according to any one of claims 1 to 11, wherein the avalanche photodiode includes an on-chip color filter.

13. A photoelectric conversion method of controlling a photoelectric conversion element including an avalanche photodiode that outputs signals in accordance with incident photons and a counter that counts the number of output signals from the avalanche photodiode and outputs the number of output signals, the method comprising:

> determining whether the number of output signals is equal to or greater than a threshold;
> controlling an exposure time of the avalanche photodiode and a recharge cycle of the avalanche photodiode during the exposure time; and
> controlling at least one of the threshold, the exposure time, and the recharge cycle so that a maximum number of recharges determined in accordance with the exposure time and the recharge cycle is greater than the threshold

14. A computer program configured to store a computer program for a photoelectric conversion element to execute the following processes:

> wherein the photoelectric conversion element includes an avalanche photodiode that outputs signals in accordance with incident photons and a counter that counts the number of output signals from the avalanche photodiode and outputs the number of output signals, and
> wherein the processes include:

>> determining whether the number of output signals is equal to or greater than a threshold;
>> controlling an exposure time of the avalanche photodiode and a recharge cycle of the avalanche photodiode during the exposure time; and
>> controlling at least one of the threshold, the exposure time, and the recharge cycle so that a maximum number of recharges determined in accordance with the exposure time and the recharge cycle is greater than the threshold.

15. A computer-readable storage medium that stores the computer program according to claim 14.

FIG. 1

FIG. 2

FIG. 3

EP 4 765 849 A1

FIG. 4

# FIG. 5

EP 4 765 849 A1

# FIG. 6A

ILLUMINATION
INTENSITY

PHOTONS

R, B

6 count

PHOTONS

G

12 count

## FIG. 6B

FIG. 6C

FIG. 7A

ILLUMINATION
INTENSITY

PHOTONS

R, B

6 count

PHOTONS

G

12 count

FIG. 7B

ILLUMINATION INTENSITY

PHOTONS

R, B

SATURATION

PHOTONS

G

SATURATION

EP 4 765 849 A1

# FIG. 7C

ILLUMINATION
INTENSITY

PHOTONS

R, B

SATURATION

PHOTONS

G

SATURATION

# FIG. 7D

ILLUMINATION
INTENSITY

PHOTONS

R, B

3 count

PHOTONS

G

6 count

## FIG. 8A

## FIG. 8B

## FIG. 8C

## FIG. 8D

# FIG. 9

| Saturation determination count number Nsat | Nsat0 | Nsat0 | Nsat0 | ・・・・・・ | Nsat0 |
|---|---|---|---|---|---|
| Exposure time t | t0 | t1 | t2 | ・・・・・・ | tmax |
| Recharge cycle T | t0/Nrch0 | t1/Nrch0 | t2/Nrch0 | ・・・・・・ | tmax/Nrch0 |
| Maximum number of recharges Nrch | Nrch0 | Nrch0 | Nrch0 | ・・・・・・ | Nrch0 |

Nrch0 > Nsat0

EP 4 765 849 A1

# FIG. 10

| Saturation determination count number Nsat | Nsat0 | Nsat1 | Nsat2 | · · · · · · | Nsatmax |
|---|---|---|---|---|---|
| Exposure time t | t0 | t1 | t2 | · · · · · · | tmax |
| Recharge cycle T | T0 | T0 | T0 | · · · · · · | T0 |
| Maximum number of recharges Nrch | t0/T0 | t1/T0 | t2/T0 | · · · · · · | tmax/T0 |

$$t0/T0 > Nsat0$$
$$t1/T1 > Nsat1$$
$$\cdot$$
$$\cdot$$
$$\cdot$$
$$tmax/T0 > Nsatmax$$

EP 4 765 849 A1

# FIG. 11

| Saturation determination count number Nsat | Nsatmax | Nsatmax | Nsatmax | · · · · · · · | Nsatmax |
|---|---|---|---|---|---|
| Exposure time t | t0 | t1 | t2 | · · · · · · · | Tmax |
| Recharge cycle T | T0 | T0 | T0 | · · · · · · · | T0 |
| Maximum number of recharges Nrch | t0/T0 | t1/T0 | t2/T0 | · · · · · · · | tmax/T0 |

$$tmax/T0 > \cdot \cdot \cdot \; t1/T1 > t0/T0 > Nsatmax$$

EP 4 765 849 A1

FIG. 12

Europäisches
Patentamt

European
Patent Office

Office européen
des brevets

## EUROPEAN SEARCH REPORT

**Application Number**

EP 25 22 2936

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/370741 A1 (TOJIMA KENZO [JP]) 16 November 2023 (2023-11-16) | 1,2,4-15 | INV. H04N25/53 H04N23/745 H04N25/773 |
| Y | * abstract * * figures 1, 3, 4A-B, 5, 6, 8 * * paragraph [0030] * * paragraph [0037] * * paragraph [0047] * * paragraph [0058] * * paragraph [0065] – paragraph [0066] * * paragraph [0068] * * paragraph [0072] * * paragraph [0083] – paragraph [0084] * * paragraph [0086] * * paragraph [0090] – paragraph [0092] * * paragraph [0208] * * paragraph [0117] – paragraph [0119] * * paragraph [0135] – paragraph [0137] * ----- | 3 | |
| Y | US 2020/252569 A1 (SUZUKI SATOSHI [JP] ET AL) 6 August 2020 (2020-08-06) | 3 | |
| A | * abstract * * figure 5 * * paragraph [0005] * ----- | 1,2,4-15 | **TECHNICAL FIELDS SEARCHED (IPC)** H04N |
| Y | US 2021/058551 A1 (TARIFA MARIANO JOS JAIMEZ [CH]) 25 February 2021 (2021-02-25) | 3 | |
| A | * abstract * * figures 4, 5 * * paragraph [0005] * ----- | 1,2,4-15 | |
| A | US 2023/065051 A1 (NUMATA AIHIKO [JP]) 2 March 2023 (2023-03-02) * abstract * * figures 4, 6A-B * * paragraph [0043] – paragraph [0045] * * paragraph [0065] – paragraph [0070] * ----- | 1-15 | |

-/--

The present search report has been drawn up for all claims

| Place of search | Date of completion of the search | Examiner |
|---|---|---|
| Munich | 25 March 2026 | Furlan, Silvano |

EPO FORM 1503 03.82 (P04C01)

page 1 of 2

Europäisches
Patentamt

European
Patent Office

Office européen
des brevets

**EUROPEAN SEARCH REPORT**

Application Number

EP 25 22 2936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/365023 A1 (KAYAMA KAZUYA [JP] ET AL) 31 October 2024 (2024-10-31)<br>* abstract *<br>* figures 3, 7, 10, 11 *<br>* paragraph [0005] - paragraph [0006] *<br>* paragraph [0074] *<br>* paragraph [0101] - paragraph [0105] *<br>----- | 1-15 | |
| A | US 2023/343879 A1 (OTA YASUHARU [JP] ET AL) 26 October 2023 (2023-10-26)<br>* abstract *<br>* figures 6A-C, 8, 10A-C *<br>* claims 1-5 *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 25 March 2026 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 765 849 A1**

## ANNEX TO THE EUROPEAN SEARCH REPORT
## ON EUROPEAN PATENT APPLICATION NO.

EP 25 22 2936

This annex lists the patent family members relating to the patent documents cited in  the above-mentioned European search report.
The members are as contained in the European Patent Office EDP file on
The European Patent Office is in no way liable for these particulars which are merely given for the purpose of information.

25-03-2026

| Patent document cited in search report | | Publication date | Patent family member(s) | | Publication date |
|---|---|---|---|---|---|
| US 2023370741 | A1 | 16-11-2023 | JP | 2023168794 A | 29-11-2023 |
| | | | US | 2023370741 A1 | 16-11-2023 |
| US 2020252569 | A1 | 06-08-2020 | JP | 7262236 B2 | 21-04-2023 |
| | | | JP | 2020127123 A | 20-08-2020 |
| | | | US | 2020252569 A1 | 06-08-2020 |
| US 2021058551 | A1 | 25-02-2021 | US | 10798298 B1 | 06-10-2020 |
| | | | US | 2021058551 A1 | 25-02-2021 |
| US 2023065051 | A1 | 02-03-2023 | JP | 7663460 B2 | 16-04-2025 |
| | | | JP | 2023032298 A | 09-03-2023 |
| | | | US | 2023065051 A1 | 02-03-2023 |
| US 2024365023 | A1 | 31-10-2024 | JP | 2024157144 A | 07-11-2024 |
| | | | US | 12133011 B1 | 29-10-2024 |
| US 2023343879 | A1 | 26-10-2023 | EP | 4277263 A1 | 15-11-2023 |
| | | | JP | 7661212 B2 | 14-04-2025 |
| | | | JP | 2022106660 A | 20-07-2022 |
| | | | JP | 2025092560 A | 19-06-2025 |
| | | | KR | 20230128061 A | 01-09-2023 |
| | | | US | 2023343879 A1 | 26-10-2023 |
| | | | WO | 2022149576 A1 | 14-07-2022 |

EPO FORM P0459

For more details about this annex : see Official Journal of the European Patent Office, No. 12/82

**REFERENCES CITED IN THE DESCRIPTION**

**Patent documents cited in the description**

- JP 2020123847 A
- JP 2024 A
- JP 224645 A